(19) Europäisches Patentamt / European Patent Office / Office européen des brevets

(11) **EP 4 682 724 A1**

(12) **EUROPEAN PATENT APPLICATION**
published in accordance with Art. 153(4) EPC

(43) Date of publication:
**21.01.2026 Bulletin 2026/04**

(21) Application number: **23930034.6**

(22) Date of filing: **04.12.2023**

(51) International Patent Classification (IPC):
*G06F 11/07* *(2006.01)*

(52) Cooperative Patent Classification (CPC):
**G06F 11/07**

(86) International application number:
**PCT/CN2023/136221**

(87) International publication number:
**WO 2024/198468 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2023 CN 202310363637**
**25.06.2023 CN 202310751941**

(71) Applicant: **Huawei Technologies Co., Ltd.**
**Shenzhen, Guangdong 518129 (CN)**

(72) Inventors:
• **JIAO, Huifang**
**Shenzhen, Guangdong 518129 (CN)**
• **LI, Yining**
**Shenzhen, Guangdong 518129 (CN)**
• **WANG, Sheng**
**Shenzhen, Guangdong 518129 (CN)**
• **ZHOU, Xue**
**Shenzhen, Guangdong 518129 (CN)**
• **ZHU, Guoliang**
**Shenzhen, Guangdong 518129 (CN)**

(74) Representative: **Grünecker Patent- und Rechtsanwälte**
**PartG mbB**
**Leopoldstraße 4**
**80802 München (DE)**

(54) **MEMORY ERROR CORRECTION METHOD, MEMORY MODULE, MEMORY CONTROLLER, AND PROCESSOR**

(57) A memory error correction method, a memory module, a memory controller, and a processor are provided. In the memory error correction method, when error correction on data obtained from the memory module fails, the memory controller determines a memory device in which an error occurs in the memory module, and further performs error correction on the data again based on the memory device in which the error occurs.

FIG. 5

## Description

This application claims priority to Chinese Patent Application No. 202310363637.6, filed on March 31, 2023 and entitled "MEMORY JOINT ERROR CORRECTION METHOD, APPARATUS, CHIP, DEVICE, AND STORAGE MEDIUM", and claims priority to Chinese Patent Application No. 202310751941.8, filed on June 25, 2023 and entitled "MEMORY ERROR CORRECTION METHOD, MEMORY MODULE, MEMORY CONTROLLER, AND PROCESSOR", which are incorporated herein by reference in their entireties.

## TECHNICAL FIELD

This application relates to the field of storage technologies, and in particular, to a memory error correction method, a memory module, a memory controller, and a processor.

## BACKGROUND

In storage technologies, a memory system includes a memory controller and a double data rate synchronous dynamic random access memory (double data rate synchronous dynamic random access memory, DDR SDRAM). The double data rate synchronous dynamic random access memory is also a memory module (memory module), which may be referred to as a memory module or a memory. The memory module includes a plurality of memory devices, where the memory devices are also referred to as dynamic random access memories (dynamic random access memory, DRAM), some memory devices are configured to store data and are referred to as data devices (data device), and the other memory devices are configured to store error correcting codes (error correcting code, ECC) of the data, that is, redundant information, and are referred to as error correcting code devices (ECC device). The error correcting codes are used to check whether an error occurs in the data stored in the memory devices. The memory controller can perform error correction on an error in a codeword based on an error correcting code, that is, the memory controller can implement system-level error correction. A memory array inside the memory device stores a plurality of groups of codewords, and each group of codewords includes data and a check code. The memory device further includes an on-die error correction engine. The on-die error correction engine can detect, based on the check code, an error in data that belongs to a same codeword as the check code. If an error occurs in a single bit in the data, the on-die error correction engine can correct the error. If an error occurs in a plurality of bits in the data, the on-die error correction engine may consider the error as a single-bit error and correct the error, or the on-die error correction engine cannot detect the error, and a silent error is formed. To be specific, the on-die error correction engine in the memory device can implement device-level error correction.

In a related technology, when data is read, the on-die error correction engine first detects an error in a memory device. Once detecting an error, the on-die error correction engine immediately reports the error to the memory controller, to assist the memory controller in locating a memory device in which an error occurs. In this way, the memory controller performs data recovery on the memory device in which the error occurs based on redundant information in an ECC device, and then re-reads data. However, in the foregoing method, in a case in which an error occurs in a plurality of bits, there is a relatively high probability that the on-die error correction engine cannot detect the error. Consequently, the memory controller cannot perform error correction on the memory device, and a data silent error risk is caused, affecting reliability of memory data.

## SUMMARY

Embodiments of this application provide a memory error correction method, a memory module, a memory controller, and a processor in a memory system, to reduce a risk of a data silent error, improve an error correction capability of the memory system, and improve reliability of data in the memory module. The technical solutions are as follows:

According to a first aspect, a memory error correction method is provided, where the method includes:

When error correction on data obtained from a memory module fails, a memory controller determines a memory device in which an error occurs in the memory module, and further performs error correction on the data again based on the memory device in which the error occurs.

A result of detecting data in a plurality of memory devices by the memory controller and a subsequent step include three cases. In a first case, no error is detected, and the memory controller directly returns the data to a processor. In a second case, a quantity of detected errors is within an error correction capability of an error correction algorithm used by the memory controller, to be specific, error correction succeeds, and the memory controller corrects the data by using the error correction algorithm, and returns data obtained through error correction to the processor. In a third case, the quantity of detected errors exceeds the error correction capability of the error correction algorithm, to be specific, error correction fails, and the memory controller determines the memory device in which the error occurs in the memory module, and further performs error correction on the data based on the memory device in which the error occurs.

The memory controller determines, based on error correction status information of the memory devices, the memory device in which the error occurs in the memory module. The memory controller may determine a memory device whose error correction status is an uncorrectable error as the memory device in which the error occurs, or may determine both a memory device whose error correction status is a correctable error and a memory device whose error correction status is an uncorrectable error as the memory device in which the error occurs.

In the foregoing method, system-level error correction based on the memory controller and device-level error correction based on an on-die error correction engine are coupled to each other. As compared with error correction performed depending only on the on-die error correction engine, a silent error that is not detected by the on-die error correction engine and an incorrectly corrected error can be corrected through data error correction performed by the memory controller. Therefore, a data silent error risk and a data incorrect correction risk in the memory device can be reduced. In addition, when the first error correction fails, the memory controller determines, by using an error correction result of the on-die error correction engine, the memory device in which the error occurs, and further performs error correction on the data again based on the memory device in which the error occurs. During the second error correction performed by the memory controller, known information used for error correction includes not only the data obtained from the memory module but also information about the memory device in which the error occurs. Therefore, as compared with error correction performed depending only on the memory controller, an error correction capability of the memory controller can be improved, so that the error correction capability of the memory system and reliability of data in the memory module can be improved.

Optionally, the memory controller determines, based on the error correction status information that is of the memory devices and that is recorded in first registers of the memory devices, the device in which the error occurs in the memory module.

The first register is an original reserved register with an undefined function in the memory module, and a value of the first register may indicate an error correction status of the memory device.

In the foregoing method, the error correction status information of the memory device is written into the first register of the memory device, and the memory controller can locate the device in which the error occurs by reading the error correction status information in the first register, so that device-level error correction and system-level error correction can cooperate with each other, to fully use redundant resources, thereby helping improve the error correction capability of the memory system in a fixed redundancy configuration.

Optionally, when error correction on the data obtained from the memory module fails, the memory controller throttles a read/write process of the memory module, and obtains data in the memory module again after throttling succeeds. When the data obtained twice is consistent, the memory controller reads the error correction status information of the plurality of memory devices from the first registers of the plurality of memory devices.

Throttling means suppressing generation of a memory access from a central processing unit (central processing unit, CPU) source or a memory access path. The memory controller determines whether a memory address corresponding to the read operation is a direct memory access address. Only when the memory address is a memory address other than the direct memory access (direct memory access, DMA) address, the memory controller can throttle the read/write process of the memory module, to prevent another read/write process from rewriting to-be-corrected data, thereby avoiding data inconsistency.

In the foregoing method, the memory controller throttles the read process of the memory module, to prevent another read/write process from rewriting the to-be-corrected data, thereby avoiding data inconsistency. In addition, the memory controller obtains the data from the memory module again, to determine whether the data is rewritten before throttling takes effect, and continues a subsequent data error correction procedure only when the data is not rewritten, thereby ensuring validity of the data error correction procedure and ensuring data consistency.

Optionally, only when a quantity of memory devices in which errors occur is less than or equal to a quantity of error correcting code devices in the memory module, the memory controller can perform error correction on the data based on the memory device in which the error occurs.

When the memory device in which the error occurs is determined, the error correction capability of the memory controller can satisfy error correction performed on a target quantity of memory devices in which errors occur, where the target quantity is the quantity of error correcting code devices in the memory module. If the quantity of memory devices in which errors occur is less than or equal to the quantity of error correcting code devices in the memory module, it indicates that a quantity of redundant memory devices in the memory module is greater than or equal to the quantity of memory devices in which errors occur. To be specific, the quantity of memory devices in which errors occur is within the error correction capability of the memory controller, and the memory controller can perform error correction on data in the memory device in which the error occurs based on data in the memory devices in which no error occurs in the memory module.

Optionally, after performing error correction on the data, the memory controller writes data obtained through error correction back into the memory device, re-reads a memory address corresponding to the read operation, and checks re-read data. If checking succeeds, the memory controller returns the re-read data to the processor; or if checking does not succeed, the memory controller reports an error to the processor.

The memory controller writes the data obtained through error correction back into the memory address corresponding to the read operation, namely, replaces all data in a location corresponding to the memory address in each memory device.

In the foregoing method, the memory controller writes the data obtained through error correction back into the memory device, so that correct data can be read when a read operation is performed on the same memory address next time, thereby helping improve reliability of data in the memory module. In addition, the memory controller checks the re-read data, and returns the data only when checking succeeds, so that data consistency can be ensured, thereby improving reliability of the data in the memory module.

Optionally, different error correction statuses of the memory device are represented by different values of a target bit of the first register, and the error correction status that is of the memory device and that is represented by the value of the target bit of the first register is any one of no error, a correctable error, and an uncorrectable error. For example, values 00B, 01B, and 10B of the target bit respectively indicate that the error correction status of the memory device is no error, a correctable error, and an uncorrectable error.

Optionally, the error correction status of the memory device is represented by an occupation status of the target bit of the register. For example, if the occupation status of the target bit is empty, to be specific, the target bit has no value, it indicates that the error correction status of the memory device is no error or the correctable error. If the occupation status of the target bit is not empty, to be specific, the target bit has a value, it indicates that the error correction status of the memory device is the uncorrectable error.

Optionally, the memory device in which the error occurs is at least one of a memory device whose error correction status is the correctable error and a memory device whose error correction status is the uncorrectable error.

The memory controller may determine a memory device whose error correction status is the uncorrectable error as the memory device in which the error occurs, or may determine both a memory device whose error correction status is the correctable error and a memory device whose error correction status is the uncorrectable error as the memory device in which the error occurs.

In the foregoing method, the memory controller may determine both the memory device whose error correction status is the correctable error and the memory device whose error correction status is the uncorrectable error as the memory device in which the error occurs. Because incorrect correction may occur when the on-die error correction engine performs error correction on data, namely, a multi-bit error is considered as a single-bit error and corrected, the memory device whose error correction status is the correctable error is also determined as the memory device in which the error occurs. In this way, the memory controller not only corrects data that cannot be corrected by the on-die error correction engine, but also can correct data that is incorrectly corrected by the on-die error correction engine. This helps further improve reliability of the data in the memory module.

Optionally, the memory device includes the on-die error correction engine. The on-die error correction engine can perform error correction on data read from the memory device, write error correction status information of the memory device into the first register of the memory device, and output data obtained through error correction to the memory controller.

In the foregoing method, the on-die error correction engine writes the error correction status information of the memory device into the first register of the memory device, so that the memory controller can locate the memory device in which the error occurs by reading the error correction status information in the first register, so that device-level error correction and system-level error correction can cooperate with each other, to fully use redundant resources, thereby helping improve the error correction capability of the memory system in the fixed redundancy configuration.

According to a second aspect, a memory error correction method is provided, where the method is executed by a memory module, the memory module includes a plurality of memory devices, each memory device includes a first register, and the method includes:

performing error correction on data read from the memory device, to obtain error correction status information of the memory device; and writing the error correction status information of the memory device into the first register of the memory device.

According to a third aspect, a memory controller is provided. The memory controller includes at least one functional module, and the at least one functional module is configured to perform the memory error correction method provided in any one of the first aspect or the possible implementations of the first aspect.

According to a fourth aspect, a memory module is provided. The memory module includes a plurality of memory devices, each memory device includes a first register, and the memory module is configured to perform the memory error correction method provided in the second aspect.

According to a fifth aspect, a memory controller is provided. The memory controller is configured to perform the memory error correction method provided in any one of the first aspect or the possible implementations of the first aspect.

According to a sixth aspect, a processor is provided. The processor includes a memory controller and a computing core, the processor is configured to perform the memory error correction method provided in any one of the first aspect or the possible implementations of the first aspect, and the computing core is configured to perform a computing operation on data in a memory device.

According to a seventh aspect, a computing device is provided. The computing device includes a memory controller and a memory module, the memory module is configured to temporarily store data, and the memory controller is configured to perform the memory error correction method provided in any one of the first aspect or the possible implementations of the first aspect.

According to an eighth aspect, a computer-readable storage medium is provided. The computer-readable storage medium is configured to store at least one segment of program code, and the at least one segment of program code is used to perform the memory error correction method provided in any one of the first aspect or the possible implementations of the first aspect.

According to a ninth aspect, a computer program product including at least one segment of program code is provided. When the at least one segment of program code is run by a computing device, the computing device is enabled to perform the memory error correction method provided in any one of the first aspect or the possible implementations of the first aspect.

**BRIEF DESCRIPTION OF DRAWINGS**

FIG. 1 is a diagram of a memory module according to an embodiment of this application;
FIG. 2 is a diagram of a memory device including an on-die error correction engine according to an embodiment of this application;
FIG. 3 is a diagram of a memory system according to an embodiment of this application;
FIG. 4 is a flowchart of a memory error correction method according to an embodiment of this application;
FIG. 5 is a schematic flowchart of a memory error correction method according to an embodiment of this application;
FIG. 6 is a block diagram of a structure of a memory error correction apparatus according to an embodiment of this application; and
FIG. 7 is a diagram of a structure of a computing device according to an embodiment of this application.

**DESCRIPTION OF EMBODIMENTS**

To make the objectives, technical solutions, and advantages of this application clearer, the following further describes the implementations of this application in detail with reference to the accompanying drawings.

**For ease of understanding the technical solutions of this application, the following first describes several technical terms in embodiments of this application.**

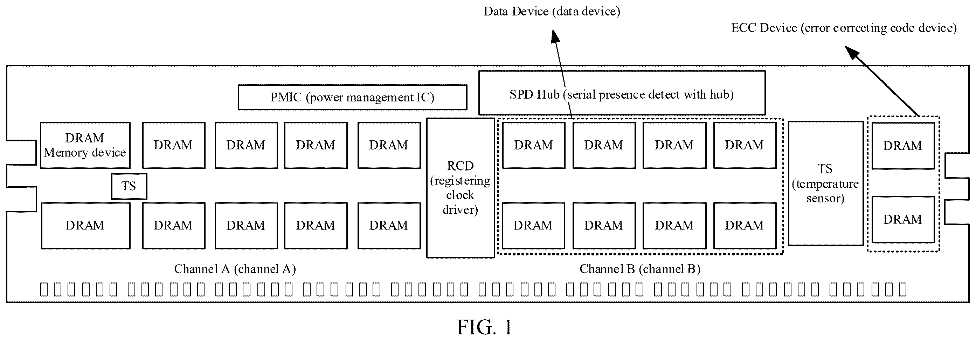

1. Memory module: The Von Neumann computer system includes five components: operation, control, storage, input, and output. The storage includes primary storage (memory) and secondary storage (a solid state drive, a hard disk drive, and the like). The memory module is mainly used as a working memory (working memory), and is configured to store instructions and data required for running a computer, and is an indispensable part of the Von Neumann computer system. A double data rate synchronous dynamic random access memory (double data rate synchronous dynamic random access memory, DDR SDRAM) is a type of the memory module, and application forms of the memory module include a surface-mounted memory device and a dual in-line memory module (dual in-line memory module, DIMM). Memory modules that are connected to a same chip select signal and that are in a memory module are also referred to as a memory rank (rank). FIG. 1 is a diagram of a memory module according to an embodiment of this application. As shown in FIG. 1, the memory module includes a dynamic random access memory (dynamic random access memory, DRAM), a registering clock driver (registering clock driver, RCD), a serial presence detect with hub (serial presence detect with hub, SPD Hub), a power management IC (power management IC, PMIC), a temperature sensor (temperature sensor, TS), a printed circuit board (printed circuit board, PCB), and other resistors and capacitors. The memory module includes two channels (channel A and channel B). In an enterprise-level memory oriented to a high-reliability application scenario, a bit width of each channel is 40 bits (bit), where a data bit width is 32 bits, and a bit width of an error correcting code (error correcting code, ECC) is 8 bits. The memory module is also referred to as a memory module (memory module). In addition to the DRAM, the memory module may also be a random access memory (random access memory, RAM) and a resistive random access memory (resistive random access memory, RRAM).

2. Memory device (device): One DRAM in the memory is a memory device, and the memory device is a storage medium in the memory module. As shown in FIG. 1, one memory module includes a plurality of memory devices. Based on content stored in the memory devices, the memory devices are further divided into data devices (data device) and error correcting code devices (ECC device). Based on a quantity of external data lanes (lane) of each memory device, the memory devices are divided into x4 memory devices and x8 memory devices, where x4 and x8 respectively represent that the quantity of external data lanes of each memory device is 4 and 8.

In an x8 memory module of the fifth-generation double data rate synchronous dynamic random access memory (double data rate synchronous dynamic random access memory, DDR5 SDRAM), one memory rank (rank) in each channel of the memory module includes four data devices (data device) and one error correcting code device (ECC device). In response to one memory read operation, each memory device outputs 128-bit data to a memory controller. The 128-bit data is distributed in two codewords, and each memory device contributes 64-bit data to one codeword. Because each memory device has eight external data lanes, data output by each memory device to the memory controller is an $8 \times 8$ data block.

In an x4 memory module of the fifth-generation double data rate synchronous dynamic random access memory (double data rate synchronous dynamic random access memory, DDR5 SDRAM), one memory rank (rank) in each channel of the memory module includes eight data devices (data device) and two error correcting code devices (ECC device). In response to one memory read operation, each memory device outputs 64-bit data to a memory controller. The 64-bit data is distributed in two codewords, and each memory device contributes 32-bit data to one codeword. Because each memory device has four external data lanes, data output by each memory device to the memory controller is a $4 \times 8$ data block.

3. A memory array (memory array) is an array used to store data in a memory device, and includes a plurality of storage units. The memory array includes a plurality of bank groups (bank group), and each bank group includes a plurality of banks (bank).

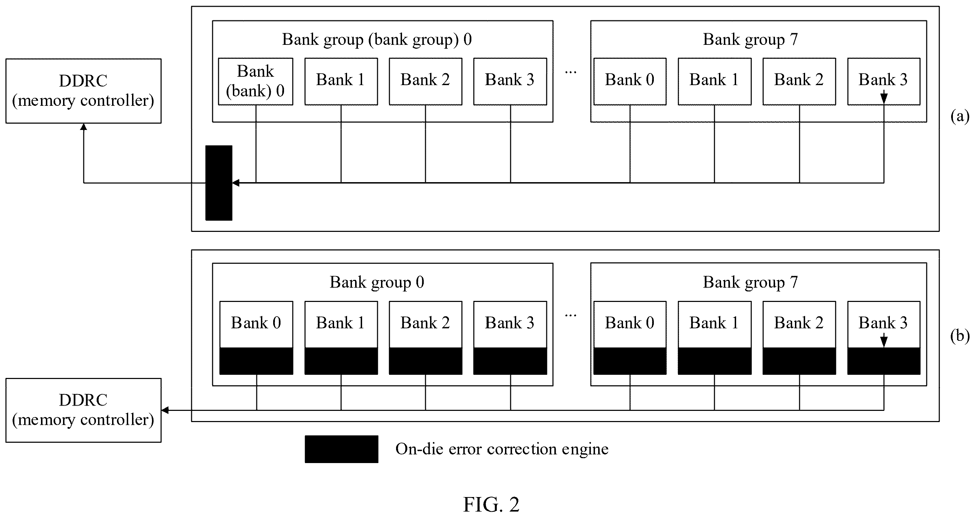

4. An on-die error correcting code (on-die ECC, OD ECC) engine is also referred to as an in-DRAM ECC engine, is an error correction engine implemented inside a memory device, and can perform error correction on data read from the memory device, to improve the yield rate of memory devices. The on-die error correction engine may exist on an input/output pin (IO pin) or global input/output (global IO, GIO) in an internal data path of the memory device, or may exist on local input/output (local IO, LIO) in the internal data path of the memory device. FIG. 2 is a diagram of a memory device including an on-die error correction engine according to an embodiment of this application. As shown in FIG. 2, FIG. 2 includes a memory device and a double data rate synchronous dynamic random access memory controller (double data rate controller, DDRC). The double data rate synchronous dynamic random access memory controller is a memory controller. The memory device includes eight bank groups (bank groups 0 to 7) and the on-die error correction engine, and each bank group includes four banks (banks 0 to 3). (a) in FIG. 2 shows a case in which the on-die error correction engine exists on the global input/output of the memory device. When a memory address corresponding to the read operation on the memory module corresponds to the bank 3 in the bank group 7, the on-die error correction engine reads data in the memory address, and the on-die error correction engine performs error correction on the read data, and returns the data obtained through error correction to the memory controller. (b) in FIG. 2 shows a case in which the on-die error correction engine exists on the local input/output of the memory device. To be specific, one on-die error correction engine performs error correction on data in each bank.

A result of detecting the read data by the on-die error correction engine includes three cases. In a first case, no error is detected, and correspondingly, an error correction status of the memory device is no error. In a second case, a single-bit error is detected, and the on-die error correction engine can correct the single-bit error, and correspondingly, the error correction status of the memory device is a correctable error. In a third case, it is detected that errors occur in a plurality of bits, and the on-die error correction engine cannot correct the multiple-bit error, and correspondingly, the error correction status of the memory device is an uncorrectable error.

5. Memory controller: The memory controller is located in a CPU, and is an important component for controlling the memory in the computer system and responsible for data exchange between the memory module and the CPU. Using an example in which the memory controller is the double data rate synchronous dynamic random access memory controller (double data rate controller, DDRC), the memory controller includes a memory controller error correction engine (DDRC ECC engine), a dynamic memory controller (dynamic memory controller, DMC), a micro control unit (micro control unit, MCU), a bit pattern generator (bit pattern generator, BPG), and a physical layer (physical layer, PHY).

6. Reed-Solomon code (Reed-Solomon code, RS code) algorithm: A codeword of the RS code algorithm includes k data symbols (symbol) and 2t error correcting code symbols (ECC symbol), where k and t are positive integers greater than 0. A symbol is data output through two pins (pin). The RS code algorithm can correct 100% errors within t symbols. If errors exceed the t symbols, an error correction capability of the RS code algorithm is exceeded. For example, the DDR5 SDRAM x8 memory module includes four data devices and one error correcting code device, where each memory device has eight external data lanes. In this case, data input by each memory device may be divided into four symbols, and data output by five memory devices to the memory controller is divided into 4×4=16 data symbols and 1×4=4 error correcting code symbols, that is, k=16, t=2. The RS code algorithm can correct errors of two symbols in the DDR5 SDRAM x8 memory module. Errors of more than two symbols are beyond the error correction capability of the RS code algorithm.

**The following describes an implementation environment of embodiments of this application.**

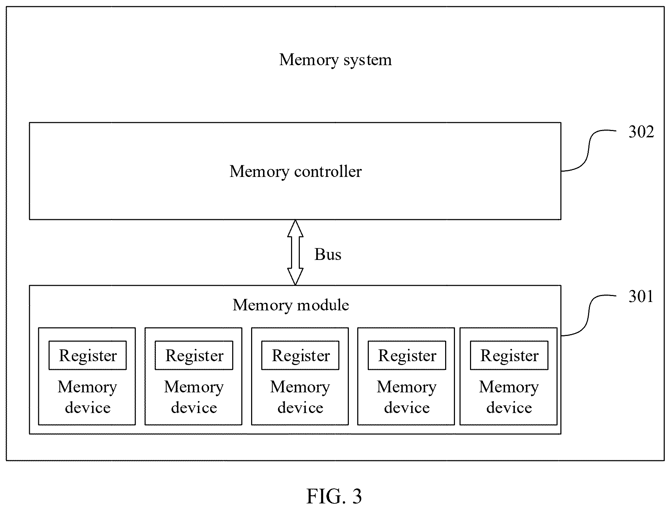

FIG. 3 is a diagram of a memory system according to an embodiment of this application. As shown in FIG. 3, the memory system includes a memory module 301 and a memory controller 302. The memory module 301 includes a plurality of memory devices, and the memory module 301 communicates with the memory controller 302 by using a DDR bus.

The memory module 301 may be any memory module with an on-die error correction engine, for example, a DDR5, a DDR6, or a low power double data rate SDRAM (Low Power Double Data Rate SDRAM, LPDDR). A form of the memory module 301 may be a dual in-line memory module, or may be a surface-mounted memory device. A memory device in the memory 301 may be an x4 memory device, or may be an x8 memory device. This is not limited in this embodiment of this application. Memory devices in the memory 301 include data devices and error correcting code devices. Each memory device stores a plurality of groups of codewords, and each group of codewords includes data and a check code. For example, the on-die error correction engine in the memory device performs, based on a check code, error correction on data that belongs to the same codeword as the check code, writes error correction status information of the memory device into a register, and outputs data obtained through error correction to the memory controller 302.

The memory controller 302 may be any memory controller having a system-level error correction function, for example, a DDRC that performs error correction by using an RS code. This is not limited in this embodiment of this application. For example, the memory controller 302 can obtain data in the memory module 301, perform error correction on the obtained data, and further write data obtained through error correction back into the memory module 301.

In this embodiment of this application, an original reserved register with an undefined function in the memory module is defined, so that a value of the register (that is, a first register) can indicate an error correction status of the memory device. In some embodiments, the error correction status of the memory device is represented by a value of a target bit of the first register. For example, values 00B, 01B, and 10B of the target bit respectively indicate that the error correction status of the memory device is no error, a correctable error, and an uncorrectable error. In some other embodiments, the error correction status of the memory device is represented by an occupation status of the target bit of the register. For example, if the occupation status of the target bit is empty, to be specific, the target bit has no value, it indicates that the error correction status of the memory device is no error or the correctable error. If the occupation status of the target bit is not empty, to be specific, the target bit has a value, it indicates that the error correction status of the memory device is the uncorrectable error. It should be noted that the foregoing description of the representation of the error correction status of the memory device is merely an example. The representation of the error correction status of the memory device may be set based on an actual requirement. This is not limited in this embodiment of this application.

The following uses a DDR5 SDRAM memory as an example to describe the representation in which the error correction status of the memory device is represented by the value of the target bit of the first register.

The DDR5 SDRAM memory includes 256 8-bit mode registers (mode register, MR): MR0 to MR255, where MR41, MR49, MR70 to MR102, MR117, MR119, MR125, MR127, MR135, MR143, MR155, MR159, MR167, MR175, MR183, MR191, MR199, MR207, MR215, MR223, MR231, MR239, MR247, and MR255 are not defined at all, and many mode registers have two or more undefined bits in register space. For example, all values of an operand 2 to an operand 6 (Operand[6:2], OP[6:2]) of MR9 may indicate the error correction status. In some embodiments, the first register MRx has two or more undefined bits in space, and space of two bits is used, for example, OP[u] and OP[v]. OP[u] and OP[v] are target bits. In this case, different values of OP[u] and OP[v] represent different error correction statuses, as shown in Table 1 below. The on-die error correction engine writes error correction status information into the first register by assigning values to OP[u] and OP[v] in the first register. As shown in Table 2, if the on-die error correction engine detects no error, the on-die error correction engine assigns a value 00B to MRx.uv (OP[u] and OP[v] in the first register MRx); if the on-die error correction engine detects a correctable error, the on-die error correction engine assigns a value 01B to MRx.uv; or if the on-die error correction engine detects an uncorrectable error, the on-die error correction engine assigns a value 10B to MRx.uv. It should be noted that the representation shown in Table 1 and the error correction statuses represented by the values shown in Table 2 are merely examples. The representation of the error correction status of the memory device may be set based on an actual requirement. This is not limited in this embodiment of this application.

Table 1

| OP[7] | ... | OP[u] | OP[v] | ... | OP[0] |
|---|---|---|---|---|---|
| | | On-die ECC error checking status (error correction status information) | | | |

Table 2

| Function (function) | Register Type (register type) | Operand (operand) | Data (value) |
|---|---|---|---|
| On-die ECC error checking status (error correction status information) | R (readable) | OP[u], OP[v] | 00B: No error reported (no error) 01B: CE (correctable error) 10B: UCE (uncorrectable error) 11B: Reserved (reserved) |

The memory controller may read the first register by using an in-band mode register read (mode register read, MRR) command, or may read the first register in an out-of-band manner. This is not limited in this embodiment of this application.

The foregoing describes a definition manner of the first register in this embodiment of this application. The following describes a memory error correction method according to an embodiment of this application. The method may be applied to a DDR5 SDRAM x8 memory module and a DDR5 SDRAM x4 memory module. The following is described by using the two memory modules as an example. It should be noted that the foregoing two types of memory modules are merely examples, and the method may be further applied to another type of memory module. This is not limited in this embodiment of this application.

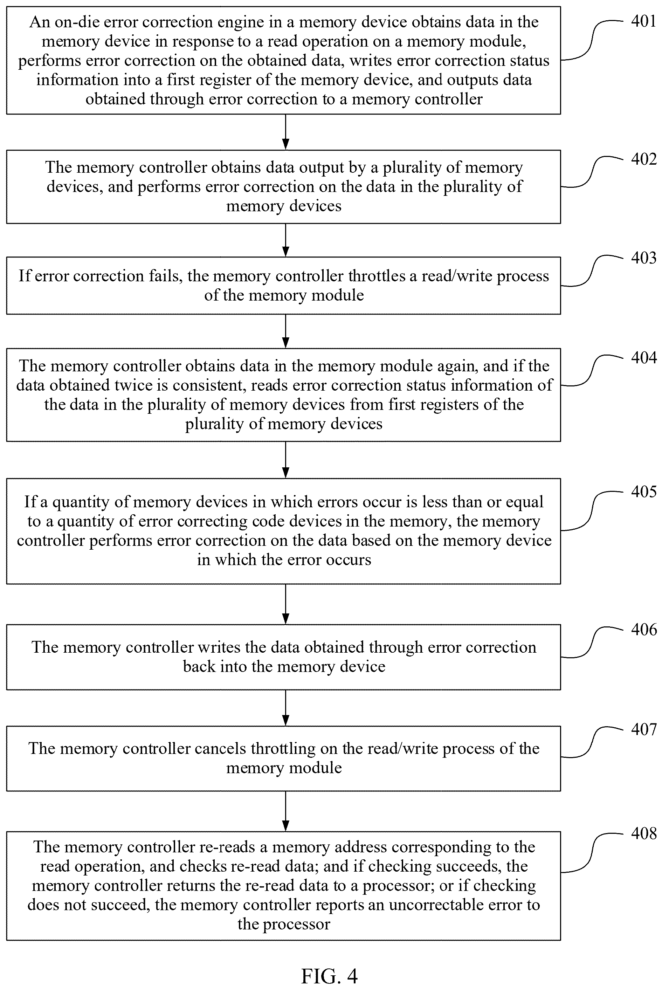

The following is described by using the DDR5 SDRAM x8 memory module as an example. FIG. 4 is a flowchart of a memory error correction method according to an embodiment of this application. As shown in FIG. 4, the method includes the following step 401 to step 408.

**401: An on-die error correction engine in a memory device obtains data in the memory device in response to a read operation on a memory module, performs error correction on the obtained data, writes error correction status information into a first register of the memory device, and outputs data obtained through error correction to a memory controller.**

The memory device stores data and a check code, where the check code is used to check whether an error occurs in the data. A process in which the on-die error correction engine obtains the data in the memory device, and performs error correction on the obtained data includes: in response to the read operation on the memory module, reading a codeword from a memory address corresponding to the read operation, where the read codeword includes data and a check code of the data; and performing error correction on the read codeword based on the read check code.

A result of detecting the data by the on-die error correction engine includes three cases. In a first case, no error is detected. In a second case: it is detected that a single-bit error occurs in the data, and the on-die error correction engine corrects the single-bit error. In a third case, it is detected that two or more bits of errors occur in the data, and the on-die error correction engine cannot correct the errors. Corresponding to the error correction result, error correction statuses of the memory device include no error, a correctable error (correctable error, CE), and an uncorrectable error (uncorrectable error, UCE). The error correction status information indicates an error correction status of the data in the memory device.

The memory device outputs data obtained through error correction to the memory controller by using a data bus. In an x8 memory module of a DDR5 SDRAM, in response to one memory read operation, each memory device outputs 128-bit data to the memory controller. The 128-bit data is distributed in two codewords, and each memory device contributes 64-bit data to one codeword. Because each memory device has eight external data lanes, data output by each memory device to the memory controller is an $8 \times 8$ data block.

In the foregoing method, the on-die error correction engine writes the error correction status information of the memory device into the first register of the memory device, so that the memory controller can locate the memory device in which the error occurs by reading the error correction status information in the first register, so that device-level error correction and system-level error correction can cooperate with each other, to fully use redundant resources, thereby helping improve the error correction capability of the memory system in a fixed redundancy configuration.

It should be noted that, in response to the read operation on the memory module, a plurality of memory devices in the memory module write error correction status information into respective first registers, and synchronously output data obtained through error correction to the memory controller. The data output by the memory devices is a superposition of data (that is, the read data) in a memory array and a result of error correction performed by the on-die error correction engine on the data.

It should be noted that the steps of obtaining, by the on-die error correction engine, the data in the memory device, performing error correction on the obtained data, and writing the error correction status information into the first register of the memory device in step 401 are optional steps. In some embodiments, if an error occurs in the memory device, the memory device directly reports the error to the memory controller, so that after error correction fails, the memory controller can determine, based on the memory device that reports the error, the memory device in which the error occurs, the memory device does not need to write the error correction status information into the first register, and the first register does not need to read the error correction status information from the first register to determine the memory device in which the error occurs. In this way, time costs and register resources for error correction can be saved.

**402: The memory controller obtains the data output by the plurality of memory devices, and performs error correction on the data in the plurality of memory devices.**

The memory controller detects the data in the plurality of memory devices. If a quantity of errors detected by the memory controller is greater than a target threshold, it indicates that error correction by the memory controller fails.

In some embodiments, the memory controller detects the data in the plurality of memory devices by using an RS code algorithm. The target threshold is a maximum quantity of errors that can be corrected by an error correction algorithm used by the memory controller. For example, the DDR5 SDRAM x8 memory module includes four data devices and one error correcting code device, where each memory device has eight external data lanes. In this case, data input by each memory device may be divided into four symbols, and data output by five memory devices to the memory controller is divided into $4 \times 4 = 16$ data symbols and $1 \times 4 = 4$ error correcting code symbols, that is, k=16, t=2. The RS code algorithm can correct errors of two symbols in the DDR5 SDRAM x8 memory. Errors of more than two symbols are beyond the error correction capability of the RS code algorithm.

A result of detecting the data in the plurality memory devices by the memory controller and a subsequent step include three cases. In a first case, no error is detected, and the memory controller directly returns the data to a CPU. In a second case, a quantity of detected errors is within the error correction capability of the error correction algorithm used by the memory controller, to be specific, error correction succeeds, and the memory controller corrects the data by using the error correction algorithm, and returns data obtained through error correction to the CPU. In a third case, the quantity of detected errors exceeds the error correction capability of the error correction algorithm, to be specific, error correction fails, and the memory controller determines the memory device in which the error occurs in the memory, and further performs error correction on the data based on the memory device in which the error occurs.

The following describes a process in which the memory controller performs error correction on the data based on the memory device in which the error occurs in the foregoing third case. The process includes the following step 403 to step 406.

**403: If error correction fails, the memory controller throttles a read/write process of the memory module.**

Throttling means suppressing generation of a memory access from a CPU source or a memory access path. The memory controller determines whether the memory address corresponding to the read operation is a direct memory access address. Only when the memory address is a memory address other than the direct memory access (direct memory access, DMA) address, the memory controller can throttle the read process of the memory module, to prevent another read/write process from rewriting to-be-corrected data, thereby avoiding data inconsistency.

In some embodiments, a processor includes a plurality of cores (core). A process in which the memory controller throttles the read/write process of the memory module includes: if a quantity of errors of data accessed by a memory read operation of any core of the processor exceeds a target threshold, the core initiates a stop core broadcast through a software generated interrupt (software generated interrupt, SGI); after receiving the stop core broadcast, another core in the processor sets a stop core flag, to stop memory access and wait to be woken up; the core that initiates the stop core broadcast detects, after a preset time, whether stopping of another core is completed; and if stopping of each core is completed, the memory controller enters a subsequent data recovery procedure; or if stopping of any core is not completed, the memory controller records a stop core failure, wakes up another core, and returns an error status. In the foregoing method, the read process of the memory module is throttled by stopping each core of the processor, so that another read/write process does not rewrite to-be-corrected data from an access source, thereby effectively ensuring data consistency.

In some other embodiments, the memory controller includes a dynamic memory controller and a physical layer (physical layer, PHY). The dynamic memory controller includes a scheduler, where the scheduler is configured to schedule a read/write command of the memory module. The memory controller cuts off a path between the scheduler and the PHY by throttling a command scheduling queue in the memory controller, to prevent another read/write process from rewriting the to-be-corrected data from the scheduling queue. Throttling is more refined, and the processor core does not stop working, so that impact on an upper-layer service is relatively small.

It should be noted that step 403 is described by using an example in which the memory address corresponding to the read operation is a memory address other than a DMA address. In some embodiments, if the memory address corresponding to the read operation is the DMA address, the memory controller abandons current error correction and returns an error status.

It should be noted that a process of throttling the read/write process of the memory module in step 403 is an optional step. In some embodiments, the process of throttling the read/write process of the memory module in step 403 is not performed. This is not limited in this embodiment of this application.

**404: The memory controller obtains data in the memory module again, and if the data obtained twice is consistent, reads the error correction status information of the data in the plurality of memory devices from the first registers of the plurality of memory devices.**

A process in which the memory controller obtains the data in the memory module is similar to the foregoing step 402, and details are not described again. If the data obtained by the memory controller twice is consistent, it indicates that the data in the memory address corresponding to the read operation is not rewritten before throttling takes effect, and the memory controller continues a subsequent data error correction procedure. If the data obtained by the memory controller twice is inconsistent, it indicates that the data in the memory address corresponding to the read operation is rewritten before throttling takes effect, and the memory controller ends the data error correction procedure and returns an error status. In the foregoing method, the data is obtained from the memory module again, to determine whether the data is rewritten before throttling takes effect, and continues a subsequent data error correction procedure only when the data is not rewritten, thereby ensuring validity of the data error correction procedure and ensuring data consistency.

The memory controller may read the first register by using an in-band mode register read command, or may read the first register in an out-of-band manner. This is not limited in this embodiment of this application.

It should be noted that step 404 is an optional step. In some embodiments, if the process of throttling the read/write process of the memory module in step 403 is not executed, step 404 is not performed. This is not limited in this embodiment of this application.

**405: If a quantity of memory devices in which errors occur is less than or equal to a quantity of error correcting code devices in the memory module, the memory controller performs error correction on the data based on the memory device in which the error occurs.**

The memory controller determines, based on the error correction status information that is of the plurality of memory devices and that is read from the first register, the memory device in which the error occurs. If error correction status information of any memory device indicates that an error occurs in the memory device, the memory controller determines that the memory device is the memory device in which the error occurs. In the foregoing method, the memory controller determines, based on the error correction status information in the first register, the memory device in which the error occurs, and further performs error correction on the data based on the memory device in which the error occurs. Device-level error correction and system-level error correction can cooperate with each other, to fully use redundant resources, thereby helping improve the error correction capability of the memory system in the fixed redundancy configuration.

In some embodiments, the memory controller determines a memory device whose error correction status is the uncorrectable error as the memory device in which the error occurs. In some other embodiments, the memory controller determines both a memory device whose error correction status is the correctable error and the memory device whose error correction status is the uncorrectable error as the memory device in which the error occurs. Because incorrect correction may occur when the on-die error correction engine performs error correction on data, namely, a multi-bit error is considered as a single-bit error and corrected, the memory device whose error correction status is the correctable error is also determined as the memory device in which the error occurs. In this way, the memory controller not only corrects data that cannot be corrected by the on-die error correction engine, but also can correct data that is incorrectly corrected by the on-die error correction engine. This helps further improve reliability of the data in the memory module.

The error correction capability of the memory controller can satisfy error correction performed on a target quantity of memory devices in which errors occur, where the target quantity is the quantity of error correcting code devices in the memory module. If the quantity of memory devices in which errors occur is less than or equal to the quantity of error correcting code devices in the memory module, it indicates that a quantity of redundant memory devices in the memory is greater than or equal to the quantity of memory devices in which errors occur. To be specific, the quantity of memory devices in which errors occur is within the error correction capability of the memory controller, and the memory controller can perform error correction on data in the memory device in which the error occurs based on data in the memory devices in which no error occurs in the memory. For example, the DDR5 SDRAM x8 memory module includes four data devices and one error correcting code device. To be specific, a quantity of redundant memory devices in the memory is 1. Only when the quantity of memory devices in which errors occur is less than or equal to 1, the memory controller can perform error correction on data in the memory device in which the error occurs. When the quantity of memory devices in which errors occur is greater than 1, the memory controller ends a data error correction procedure, and returns the uncorrectable error to the CPU.

In some embodiments, the memory controller uses an erasure code (erasure code, EC) algorithm to perform error correction on data in the memory device in which the error occurs. Using the DDR5 SDRAM x8 memory module as an example, the data error correction process includes the following step 405A to step 405C.

405A: Denote data in four data devices as D1, D2, D3, and D4 respectively, and denote data in one error correcting code device (redundant device) as C1, where D1, D2, D3, D4, and C1 are all $8\times8$ data blocks. Based on the RS code algorithm, that is, the property of the EC code, a matrix H exists for generating a codeword, where visible elements of H are all $8\times8$ block matrices. This process may be represented by the following formula (1).

$$\begin{bmatrix} 1 & 0 & 0 & 0 \\ 0 & 1 & 0 & 0 \\ 0 & 0 & 1 & 0 \\ 0 & 0 & 0 & 1 \\ B1 & B2 & B3 & B4 \end{bmatrix} \begin{bmatrix} D1 \\ D2 \\ D3 \\ D4 \end{bmatrix} \qquad (1)$$

405B: In a case in which an error occurs in any memory device, remove a matrix row corresponding to the memory device from the matrix H, where the matrix is still a full-rank matrix $H'$, and the full-rank matrix has an inverse matrix $H'^{-1}$. For example, if an error occurs in the memory device D1, a matrix row corresponding to D1 is removed from the matrix H. This process may be represented by the following formula (2).

$$\begin{bmatrix} 1 & 0 & 0 & 0 \\ 0 & 1 & 0 & 0 \\ 0 & 0 & 1 & 0 \\ 0 & 0 & 0 & 1 \\ B1 & B2 & B3 & B4 \end{bmatrix} \begin{bmatrix} D1 \\ D2 \\ D3 \\ D4 \end{bmatrix} = \begin{bmatrix} D2 \\ D3 \\ D4 \\ C1 \end{bmatrix} \qquad (2)$$

405C: Left-multiply data obtained after D1 is removed by the inverse matrix $H'^{-1}$, to obtain data obtained through error correction, where this process may be represented by the following formula (3).

$$\begin{bmatrix} D1 \\ D2 \\ D3 \\ D4 \end{bmatrix} = H'^{-1} \begin{bmatrix} D2 \\ D3 \\ D4 \\ C1 \end{bmatrix} \qquad (3)$$

It should be noted that the foregoing step 403 to step 405 are an implementation in which if error correction fails, the memory device in which the error occurs in the memory module is determined, and error correction is performed on the data based on the memory device in which the error occurs. In the following embodiment, the process is implemented based on another manner. This is not limited in this embodiment of this application.

**406: The memory controller writes the data obtained through error correction back into the memory device.**

The memory controller writes the data obtained through error correction back into the memory address corresponding to the read operation, namely, replaces all data in a location corresponding to the memory address in each memory device. In some embodiments, the memory controller writes data that is in the data obtained through error correction and that corresponds to the memory device in which the error occurs back into the location corresponding to the memory address in the memory device, that is, replaces data only in the location corresponding to the memory address in the memory device in which the error occurs. This is not limited in this embodiment of this application.

In the foregoing method, the memory controller writes the data obtained through error correction back into the memory device, so that correct data can be read when a read operation is performed on the same memory address next time, thereby helping improve reliability of data in the memory module.

It should be noted that step 406 is an optional step. In some embodiments, step 406 is not performed, and the memory controller directly returns the data obtained through error correction to the CPU, to shorten a time of responding to the read operation on the memory module, and improve response efficiency. This is not limited in this embodiment of this application.

**407: The memory controller cancels throttling on the read/write process of the memory module.**

Step 407 corresponds to the foregoing step 403. If the memory controller throttles the read/write process of the memory module by stopping a core of the processor, the memory controller cancels throttling by waking up the core of the processor; or if the memory controller throttles the read/write process of the memory module by using a throttling command scheduling queue, the memory controller cancels throttling on the command scheduling queue, so that a path between the scheduler and the physical interface protocol is connected, thereby canceling throttling on the read/write process of the memory module.

It should be noted that step 407 is an optional step. In some embodiments, if step 403 is not performed, step 407 is not performed. This is not limited in this embodiment of this application.

**408: The memory controller re-reads the memory address corresponding to the read operation, and checks re-read data; and if checking succeeds, the memory controller returns the re-read data to the processor; or if checking does not succeed, the memory controller reports the uncorrectable error to the processor.**

A process in which the memory controller re-reads the memory address corresponding to the read operation is similar to the process in which the memory controller obtains the data in the memory module in step 402, and a process in which the memory controller checks the re-read data is similar to the process in which the memory controller detects the data in step 402. Details are not described again.

In the foregoing step 408, the memory controller checks the re-read data, and returns the data only when checking succeeds, so that data consistency can be ensured, thereby improving reliability of the data in the memory.

It should be noted that step 408 is an optional step. In some embodiments, if step 406 is not performed, step 408 is not performed. This is not limited in this embodiment of this application.

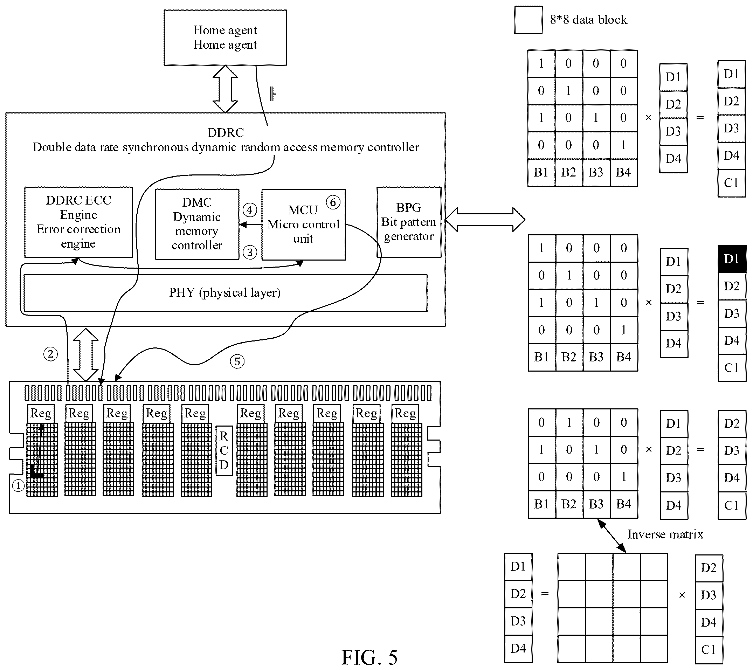

The following describes, by using FIG. 5 as an example, the procedure shown in the foregoing step 401 to step 408. FIG. 5 is a schematic flowchart of a memory error correction method according to an embodiment of this application. As shown in FIG. 5, FIG. 5 includes a memory controller and a memory module. The memory module is a DDR5 SDRAM x8 memory module, and the memory controller is a DDRC. One memory rank in one channel in the memory module includes four data devices and one error correcting code device, each data device has eight external data lanes, the memory device includes an on-die error correction engine, and each memory device corresponds to one first register. The memory controller includes an RS code DDRC ECC engine, a DMC, an MCU, a BPG, and a PHY.

Step 1 in FIG. 5 (corresponding to the foregoing step 401): In response to a read operation on the memory module, the on-die error correction engine reads data from a memory array of a memory device and checks the data, and writes error correction status information into an MRx register based on a checking result. Step 2 in FIG. 5 (corresponding to the foregoing step 402): Data in each memory device is returned to the DDRC ECC engine in the memory controller through a data bus, where the DDRC ECC engine detects the data in the memory device by using an RS code algorithm; if the RS code DDRC ECC engine detects no error, the memory controller directly returns the data to a CPU, and the procedure ends in advance; if a quantity of error symbols detected by the RS code DDRC ECC engine is less than or equal to t, the memory controller corrects the data by using the RS code DDRC ECC engine and returns the data to the CPU, and the procedure ends in advance; or if the quantity of error symbols detected by the RS code DDRC ECC engine is greater than t, an upper limit of an error correction capability of the RS code DDRC ECC engine is exceeded. Step 3 in FIG. 5 (corresponding to the foregoing step 403): If an error of memory data accessed by any CPU core exceeds the upper limit of the error correction capability of the RS code DDRC ECC engine, the RS code DDRC ECC engine triggers a synchronous exception (synchronous external abort, SEA), and the MCU enters a basic input/output system (basic input/output system, BIOS) processing procedure. The MCU first determines whether the address is a DMA address and performs a corresponding operation. If the address is a DMA address, the MCU abandons the current error correction, returns an error status, and executes the original processing procedure. If the address is not a DMA address, the MCU continues to perform the subsequent error correction procedure. In step 4 (corresponding to the foregoing step 403) in FIG. 5, the DMC throttles a read/write process of the memory module, so that data is not rewritten by another read/write process, thereby avoiding data inconsistency. Step 5 in FIG. 5 (corresponding to the foregoing step 404): The MCU reads a memory device (DRAM) by using the BPG, and compares read data with error data recorded by the RS code DDRC ECC engine; and if the data is consistent, the MCU continues the processing procedure; and otherwise, it indicates that the data is rewritten before throttling takes effect, the procedure ends in advance, and an error status is returned. The MCU directly reads the first register (MRx.uv) of each memory device by using an MRR command, and records error correction status information obtained by the on-die error correction engine of each memory device. Step 6 in FIG. 5 (corresponding to the foregoing step 405 and step 406): Only when an error correction status of a particular device is 10B, error correction statuses of other devices are all 00B or 01B, the MCU performs data error correction by using an EC algorithm; and in other scenarios, the procedure ends in advance, and an uncorrectable error is returned. After error correction by using the EC algorithm is completed, the MCU writes corrected data back into the memory device by using the BPG, modifies an interrupt return vector, and triggers the system to reread the memory address corresponding to the read operation, that is, reread the cacheline (cacheline). In step 7 (corresponding to the foregoing step 407 and step 408) in FIG. 5, the MCU cancels throttling. After throttling is canceled, the memory controller initiates re-reading of data in the memory device in which the error occurs, and checks the re-read data by using the RS code DDRC ECC engine. If checking succeeds, the data is returned; and otherwise, an uncorrectable error is reported.

It should be noted that the foregoing step 401 to step 408 are described by using the DDR5 SDRAM x8 memory module as an example. The memory error correction method provided in this embodiment of this application may be further applied to a DDR5 SDRAM x4 memory module. The memory error correction method in the DDR5 SDRAM x4 memory module is similar to the procedure shown in the foregoing step 401 to step 407. A difference lies in that, in the DDR5 SDRAM x4 memory module, in response to one memory read operation, each memory device outputs 64-bit data to the memory controller, where the 64-bit data is distributed in two codewords, and each memory device contributes 32-bit data for one codeword. Because each memory device has four external data lanes, data output by each memory device to the memory controller is a 4×8 data block. In addition, the DDR5 SDRAM x4 memory module includes eight data devices and two error correcting code devices, that is, a quantity of redundant memory devices in the memory module is 2. Only when a quantity of memory devices in which errors occur is less than or equal to 2, the memory controller can correct data in the memory device in which the error occurs; or when the quantity of memory devices in which the errors occur is greater than 2, the memory controller ends the data correction procedure, and returns an uncorrectable error to the CPU. In the DDR5 SDRAM x4 memory module, a process in which the memory controller performs error correction on data includes the following step A to step C.

Step A: Denote data in the eight data devices as D1, D2, ..., and D8 respectively, and denote data in the two error correcting code devices (redundant devices) as C1 and C2, where D1 to D8, C1, and C2 are all 4×8 data blocks. Based on the RS code algorithm, that is, the property of the EC code, a matrix H exists for generating a codeword, where visible elements of H are all 4×4 block matrices. This process may be represented by the following formula (4).

$$
\begin{bmatrix}
1 & 0 & 0 & 0 & 0 & 0 & 0 & 0 \\
0 & 1 & 0 & 0 & 0 & 0 & 0 & 0 \\
0 & 0 & 1 & 0 & 0 & 0 & 0 & 0 \\
0 & 0 & 0 & 1 & 0 & 0 & 0 & 0 \\
0 & 0 & 0 & 0 & 1 & 0 & 0 & 0 \\
0 & 0 & 0 & 0 & 0 & 1 & 0 & 0 \\
0 & 0 & 0 & 0 & 0 & 0 & 1 & 0 \\
0 & 0 & 0 & 0 & 0 & 0 & 0 & 1 \\
B1 & B2 & B3 & B4 & B5 & B6 & B7 & B8 \\
B9 & B10 & B11 & B12 & B13 & B14 & B15 & B16
\end{bmatrix}
\begin{bmatrix}
D1 \\ D2 \\ D3 \\ D4 \\ D5 \\ D6 \\ D7 \\ D8
\end{bmatrix}
=
\begin{bmatrix}
D1 \\ D2 \\ D3 \\ D4 \\ D5 \\ D6 \\ D7 \\ D8 \\ C1 \\ C1
\end{bmatrix}
\quad (4)
$$

Step B: In a case in which errors occur in any two memory devices, remove matrix rows corresponding to the two memory devices from the matrix H, where the matrix is still a full-rank matrix $H'$, and the full-rank matrix $H'$ has an inverse matrix $H'^{-1}$. For example, if errors occur in the memory devices D1 and C1, matrix rows corresponding to D1 and C1 are removed from the matrix H. This process may be represented by the following formula (5).

$$
\begin{bmatrix}
0 & 1 & 0 & 0 & 0 & 0 & 0 & 0 \\
0 & 0 & 1 & 0 & 0 & 0 & 0 & 0 \\
0 & 0 & 0 & 1 & 0 & 0 & 0 & 0 \\
0 & 0 & 0 & 0 & 1 & 0 & 0 & 0 \\
0 & 0 & 0 & 0 & 0 & 1 & 0 & 0 \\
0 & 0 & 0 & 0 & 0 & 0 & 1 & 0 \\
0 & 0 & 0 & 0 & 0 & 0 & 0 & 1 \\
B9 & B10 & B11 & B12 & B13 & B14 & B15 & B16
\end{bmatrix}
\begin{bmatrix}
D1 \\ D2 \\ D3 \\ D4 \\ D5 \\ D6 \\ D7 \\ D8
\end{bmatrix}
=
\begin{bmatrix}
D2 \\ D3 \\ D4 \\ D5 \\ D6 \\ D7 \\ D8 \\ C2
\end{bmatrix}
\quad (5)
$$

Step C: Left-multiply read data by the inverse matrix $H'^{-1}$, to obtain data obtained through error correction, where this process may be represented by the following formula (6).

$$\begin{bmatrix} D1 \\ D2 \\ D3 \\ D4 \\ D5 \\ D6 \\ D7 \\ D8 \end{bmatrix} = H'^{-1} \begin{bmatrix} D2 \\ D3 \\ D4 \\ D5 \\ D6 \\ D7 \\ D8 \\ C2 \end{bmatrix} \qquad (6)$$

Other steps of the memory error correction method in the DDR5 SDRAM x4 memory module are similar to the steps of the memory error correction method in the DDR5 SDRAM x8 memory module, and similar parts are not described again.

In the foregoing method, the on-die error correction engine performs error correction on the data for the first time, and writes the error correction status information of the memory device into the first register, so that the memory controller can locate the device in which the error occurs by reading the error correction status information in the first register. Device-level error correction and system-level error correction can cooperate with each other, to fully use redundant resources, thereby helping improve the error correction capability of the memory system in the fixed redundancy configuration. After obtaining the data, the memory controller performs error correction on the data for the second time. As compared with error correction performed depending only on the on-die error correction engine, a silent error that is not detected by the on-die error correction engine and an incorrectly corrected error can be corrected, so that a data silent error risk and a data incorrect correction risk in the memory device can be reduced. If the memory controller fails in error correction, the memory controller reads the error correction status information of the memory device from the register in the memory module, determines, based on the error correction status information, the memory device in which the error occurs, and further performs error correction on the data for the third time. Because a result of device-level error correction is used, as compared with error correction performed depending only on the memory controller, the error correction capability of the memory controller can be improved, so that the error correction capability of the memory system and reliability of the data in the memory module are improved. For the x4 memory, this method can be used to perform error correction on two memory devices (dual-chipkill). For the x8 memory module, this method can be used to perform error correction on a single memory device (chipkill).

It should be noted that the foregoing embodiment is described by using a module form in an application form for the memory module as an example. In some embodiments, the memory error correction method provided in this embodiment of this application may be applied to a memory module in a form of a surface-mounted memory device. In some other embodiments, the memory error correction method provided in this embodiment of this application is also applicable to a scenario in which a memory device includes an on-die error correction engine and a memory controller performs error correction by using an RS code, for example, a scenario of a DDR6 or an LPDDR4 with sideband ECC (sideband ECC). This embodiment of this application is not limited to the specific scenario shown above.

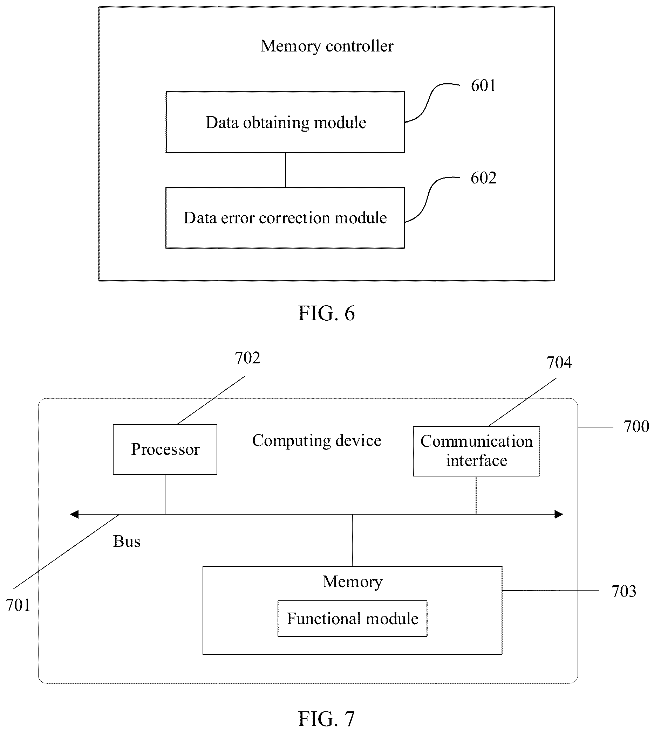

FIG. 6 shows a memory controller according to an embodiment of this application. The memory controller includes a data obtaining module 601 and a data error correction module 602.

The data obtaining module 601 is configured to obtain data from a memory module in response to a read operation on the memory module.

The data error correction module 602 is configured to: perform error correction on the data, and if error correction fails, determine a memory device in which an error occurs in the memory module, and perform error correction on the data based on the memory device in which the error occurs.

Optionally, the data error correction module 602 includes:

a reading unit, configured to: perform error correction on the data, and if error correction fails, read, from first registers of a plurality of memory devices, error correction status information of the plurality of memory devices; and
a determining unit, configured to: if the error correction status information of any one of the memory devices indicates that an error occurs in the memory device, determine that the memory device is the memory device in which the error occurs.

Optionally, the reading unit is configured to:

perform error correction on the data, and if error correction fails, throttle, by the memory controller, a read/write process of the memory module; and

obtain data in the memory module again, and if the data obtained twice is consistent, read the error correction status information of the plurality of memory devices from the first registers of the plurality of memory devices.

Optionally, the data error correction module includes:

an error correction unit, configured to: if a quantity of memory devices in which errors occur is less than or equal to a quantity of error correcting code devices in the memory module, perform error correction on the data based on the memory device in which the error occurs.

Optionally, the memory controller further includes:

a write-back module, configured to write data obtained through error correction back into the memory device;
a re-reading module, configured to re-read a memory address corresponding to the read operation; and
a checking module, configured to check the re-read data, and if checking succeeds, return the re-read data to a processor; or if checking does not succeed, report, by the memory controller, an error to the processor.

Optionally, the error correction status of the memory device is a value of a target bit of the first register, and an error correction status that is of the memory device and that is indicated by the value of the target bit of the first register is any one of no error, a correctable error, and an uncorrectable error.

Optionally, the error correction status of the memory device is an occupation status of a target bit of the first register, when the occupation status of the target bit of the first register is empty, it indicates that an error correction status of the memory device is no error or a correctable error, and when the occupation status of the target bit of the first register is not empty, it indicates that the error correction status of the memory device is an uncorrectable error.

Optionally, the memory device in which the error occurs is at least one of a memory device whose error correction status is the correctable error and a memory device whose error correction status is the uncorrectable error.

Both the data obtaining module 601 and the data error correction module 602 may be implemented by using software, or may be implemented by using hardware. For example, the following uses the data obtaining module 601 as an example to describe an implementation of the data obtaining module 601. Similarly, for an implementation of the data error correction module 602, refer to an implementation of the data obtaining module 601.

A module is used as an example of a software functional unit, and the obtaining module 601 may include code run on a computing instance. The computing instance may include at least one of a physical host (a computing device), a virtual machine, and a container. Further, there may be one or more computing instances. For example, the data obtaining module 601 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the data obtaining module 601 may include at least one computing device, such as a server. Alternatively, the data obtaining module 601 may be a device implemented by using an application-specific integrated circuit (application-specific integrated circuit, ASIC), a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

The plurality of computing devices included in the data obtaining module 601 may be distributed in a same region, or may be distributed in different regions. A plurality of computing devices included in the data obtaining module 601 may be distributed in a same AZ, or may be distributed in different AZs. Similarly, a plurality of computing devices included in the data error correction module 602 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that, in another embodiment, steps implemented by the foregoing modules may be specified as required, and different steps in the foregoing memory error correction method are respectively implemented by the foregoing modules to implement all functions of the foregoing apparatus. In other words, when the memory error correction apparatus provided in the foregoing embodiment implements the memory error correction method, division of the foregoing functional modules is merely used as an example for description. In actual application, the foregoing functions may be allocated to different functional modules for implementation based on a requirement. To be specific, an inner structure of the apparatus is divided into different functional modules to complete all or some of the functions described above. In addition, the apparatus provided in the foregoing embodiment and the corresponding method embodiment belong to a same concept. For a specific implementation process thereof, refer to the method embodiment. Details are not described herein again.

This application further provides a computing device. The computing device includes a memory controller and a memory module, the memory module is configured to temporarily store data, and the memory controller is configured to perform the memory error correction method provided in the foregoing method embodiment.

FIG. 7 is a diagram of a structure of a computing device according to an embodiment of this application. As shown in FIG. 7, a computing device 700 includes a bus 701, a processor 702, a memory 703, and a communication interface 704. The processor 702, the memory 703, and the communication interface 704 communicate with each other through the bus 701. The computing device 700 may be a server or a terminal device. It should be understood that quantities of processors and memories in the computing device 700 are not limited in this application.

The bus 701 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 7, but this does not mean that there is only one bus or only one type of bus. The bus 701 may include a path for transmitting information between components (for example, the memory 703, the processor 702, and the communication interface 704) of the computing device 700.

The processor 702 may include any one or more of processors such as a central processing unit (central processing unit, CPU), a graphics processing unit (graphics processing unit, GPU), a micro processor (micro processor, MP), or a digital signal processor (digital signal processor, DSP).

The memory 703 may include a volatile memory (volatile memory, VM), for example, a random access memory (random access memory, RAM). The memory 703 may further include a non-volatile memory (non-volatile memory, NVM), for example, a read-only memory (read-only memory, ROM), a flash memory, a hard disk drive (hard disk drive, HDD), or a solid state drive (solid state drive, SSD).

The memory 703 stores executable program code, and the processor 702 executes the executable program code to separately implement functions of the data obtaining module 601 and the data error correction module 602, so as to implement the memory error correction method. To be specific, the memory 703 stores instructions used to perform the memory error correction method.

The communication interface 704 is a transceiver module, for example, but not limited to, a network interface card or a transceiver, to implement communication between the computing device 700 and another device or a communication network.

An embodiment of this application provides a processor. The processor includes a memory controller and a computing core. The processor is configured to perform the memory error correction method provided in the foregoing embodiment. The computing core is configured to perform a computing operation on data in a memory device.

An implementation of this application provides a computer program product including instructions. The computer program product may be software or a program product that includes instructions and that can be run on a computing device or that can be stored in any usable medium. When the computer program product is run on at least one computing device, the at least one computing device is enabled to perform the memory error correction method provided in the foregoing embodiment.

An embodiment of this application provides a computer-readable storage medium. The computer-readable storage medium may be any usable medium that can be stored by a computing device, or a data storage device, for example, a data center including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions. When the instructions are executed by a computing device cluster, the computing device cluster performs the memory error correction method provided in the foregoing embodiment.

It should be noted that information (including but not limited to user equipment information, personal information of a user, and the like), data (including but not limited to data used for analysis, stored data, displayed data, and the like), and signals in this application are used under authorization by the user or full authorization by all parties, and collection, use, and processing of related data need to conform to related laws, regulations, and standards of related countries and regions. For example, data in this application is obtained under full authorization.

A person of ordinary skill in the art may be aware that, in combination with the embodiments disclosed in this specification, method steps and units may be implemented by electronic hardware, computer software, or a combination thereof. To clearly describe the interchangeability between the hardware and the software, the foregoing has generally described steps and compositions of each embodiment based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments of this application.

In addition, the units in embodiments of this application may be integrated into one processing unit, each of the units may exist alone physically, or two or more units may be integrated into one unit. The integrated unit may be implemented in a form of hardware, or may be implemented in a form of a software unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computing device (which may be a personal computer, a server, a computing device, or the like) to perform all or some of steps of the methods in embodiments of this application. The foregoing storage medium includes various media that may store program code, such as a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or timing dependency between "first", "second", and "n$^{th}$", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of various examples, a first memory device may be referred to as a second memory device, and similarly, the second memory device may be referred to as the first memory device. Both the first memory device and the second memory device may be memory devices, and in some cases, may be separate and different memory devices.

The term "at least one" in this application means one or more, and the term "a plurality of" in this application means two or more. For example, a plurality of first memory devices means two or more than two first memory devices. The terms "system" and "network" are often used interchangeably in this specification.

It should be further understood that the term "if" may be interpreted as "when" ("when" or "upon"), "in response to determining", or "in response to detecting". Similarly, based on the context, a phrase "if determining" or "if detecting [a stated condition or event]" may be interpreted as a meaning of "when determining", "in response to determining", "when detecting [a stated condition or event]", or "in response to detecting [a stated condition or event]".

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or some of the embodiments may be implemented in a form of a computer program product. The computer program product includes one or more computer program instructions. When the computer program instructions are loaded and executed on a computer, all or some of the procedures or functions according to embodiments of this application are generated. The computer may be a general-purpose computer, a dedicated computer, a computer network, or another programmable apparatus.

The computer instructions may be stored in a computer-readable storage medium or may be transmitted from a computer-readable storage medium to another computer-readable storage medium. For example, the computer program instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD), a semiconductor medium (for example, a solid state drive)), or the like.

A person of ordinary skill in the art may understand that all or some of the steps of the embodiments may be implemented by using hardware or a program indicating related hardware. The program may be stored in a computer-readable storage medium. The storage medium mentioned above may be a read-only memory, a magnetic disk, an optical disc, or the like.

The foregoing embodiments are merely intended for describing the technical solutions of this application rather than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

**Claims**

1. A memory error correction method, wherein the method comprises:

    obtaining, by a memory controller, data from a memory module in response to a read operation on the memory module; and
    performing, by the memory controller, error correction on the data, and if error correction fails, determining a memory device in which an error occurs in the memory module, and performing error correction on the data based on the memory device in which the error occurs.

2. The method according to claim 1, wherein performing, by the memory controller, error correction on the data, and if error correction fails, determining the memory device in which the error occurs in the memory module comprises:

    performing, by the memory controller, error correction on the data, and if error correction fails, reading, from first registers of the plurality of memory devices, error correction status information of the plurality of memory devices; and
    if the error correction status information of any one of the memory devices indicates that an error occurs in the memory device, determining, by the memory controller, that the memory device is the memory device in which the error occurs.

3. The method according to claim 2, wherein performing, by the memory controller, error correction on the data, and if error correction fails, reading, from the first registers of the plurality of memory devices, the error correction status information of the plurality of memory devices comprises:

    performing, by the memory controller, error correction on the data, and if error correction fails, throttling, by the memory controller, a read/write process of the memory module; and
    obtaining, by the memory controller, data in the memory module again, and if the data obtained twice is consistent, reading the error correction status information of the plurality of memory devices from the first registers of the plurality of memory devices.

4. The method according to any one of claims 1 to 3, wherein performing error correction on the data based on the memory device in which the error occurs comprises:
    if a quantity of memory devices in which errors occur is less than or equal to a quantity of error correcting code devices in the memory module, performing error correction on the data based on the memory device in which the error occurs.

5. The method according to any one of claims 1 to 4, wherein after performing error correction on the data based on the memory device in which the error occurs, the method further comprises:

    writing, by the memory controller, data obtained through error correction back into the memory device;
    re-reading, by the memory controller, a memory address corresponding to the read operation, and checking re-read data; and
    if checking succeeds, returning, by the memory controller, the re-read data to a processor; or

**EP 4 682 724 A1**

if checking does not succeed, reporting, by the memory controller, an error to the processor.

6. The method according to any one of claims 2 to 5, wherein an error correction status of the memory device is represented by a value of a target bit of the first register, and the error correction status that is of the memory device and that is represented by the value of the target bit of the first register is any one of no error, a correctable error, and an uncorrectable error.

7. The method according to any one of claims 2 to 5, wherein an error correction status of the memory device is represented by an occupation status of a target bit of the first register, when the occupation status of the target bit of the first register is empty, it indicates that the error correction status of the memory device is no error or a correctable error, and when the occupation status of the target bit of the first register is not empty, it indicates that the error correction status of the memory device is an uncorrectable error.

8. The method according to any one of claims 1 to 7, wherein the memory device in which the error occurs is at least one of a memory device whose error correction status is the correctable error and a memory device whose error correction status is the uncorrectable error.

9. The method according to any one of claims 2 to 8, wherein the memory device comprises an on-die error correction engine, and the method further comprises:

obtaining, by the on-die error correction engine, data in the memory device in response to a read operation on the memory module; and
performing, by the on-die error correction engine, error correction on the obtained data, writing the error correction status information of the memory device into the first register of the memory device, and outputting data obtained through error correction to the memory controller.

10. A memory error correction method, performed by a memory module, wherein the memory module comprises a plurality of memory devices, each of the memory devices comprises a first register, and the method comprises:

performing error correction on data in the memory devices, to obtain error correction status information of the memory devices; and
writing the error correction status information into the first registers of the memory devices.

11. A memory controller, wherein the memory controller comprises:

a data obtaining module, configured to obtain data from a memory module in response to a read operation on the memory module; and
a data error correction module, configured to: perform error correction on the data, and if error correction fails, determine a memory device in which an error occurs in the memory module, and perform error correction on the data based on the memory device in which the error occurs.

12. The memory controller according to claim 11, wherein the data error correction module comprises:

a reading unit, configured to: perform error correction on the data, and if error correction fails, read, from first registers of the plurality of memory devices, error correction status information of the plurality of memory devices; and
a determining unit, configured to: if the error correction status information of any one of the memory devices indicates that an error occurs in the memory device, determine that the memory device is the memory device in which the error occurs.

13. The memory controller according to claim 12, wherein the reading unit is configured to:

perform error correction on the data, and if error correction fails, throttle a read/write process of the memory module; and
obtain data in the memory module again, and if the data obtained twice is consistent, read the error correction status information of the plurality of memory devices from the first registers of the plurality of memory devices.

14. The memory controller according to any one of claims 11 to 13, wherein the data error correction module comprises:

19

an error correction unit, configured to: if a quantity of memory devices in which errors occur is less than or equal to a quantity of error correcting code devices in the memory module, perform error correction on the data based on the memory device in which the error occurs.

15. The memory controller according to any one of claims 11 to 14, wherein the apparatus further comprises:

a write-back module, configured to write data obtained through error correction back into the memory device;
a re-reading module, configured to re-read a memory address corresponding to the read operation; and
a checking module, configured to check the re-read data, and if checking succeeds, return the re-read data to a processor; or if checking does not succeed, report an error to the processor.

16. The memory controller according to any one of claims 12 to 15, wherein the error correction status information of the memory device is a value of a target bit of the first register, and an error correction status that is of the memory device and that is indicated by the value of the target bit of the first register is any one of no error, a correctable error, and an uncorrectable error.

17. The memory controller according to any one of claims 12 to 15, wherein the error correction status information of the memory device is an occupation status of a target bit of the first register, when the occupation status of the target bit of the first register is empty, it indicates that an error correction status of the memory device is no error or a correctable error, and when the occupation status of the target bit of the first register is not empty, it indicates that the error correction status of the memory device is an uncorrectable error.

18. The memory controller according to any one of claims 11 to 17, wherein the memory device in which the error occurs is at least one of a memory device whose error correction status is the correctable error and a memory device whose error correction status is the uncorrectable error.

19. A memory module, wherein the memory module comprises a plurality of memory devices, each of the memory devices comprises a first register, and the memory module is configured to perform the memory error correction method according to claim 10.

20. A memory controller, wherein the memory controller is configured to perform the memory error correction method according to any one of claims 1 to 9.

21. A processor, wherein the processor comprises a memory controller and a computing core, the processor is configured to perform the memory error correction method according to any one of claims 1 to 9, and the computing core is configured to perform a computing operation on data in a memory device.

22. A computing device, comprising a memory controller and a memory module, wherein the memory module is configured to temporarily store data, and the memory controller is configured to perform the memory error correction method according to any one of claims 1 to 9.

23. A computer-readable storage medium, wherein the computer-readable storage medium is configured to store at least one segment of program code, and the at least one segment of program code is used to perform the memory error correction method according to any one of claims 1 to 9.

Data Device (data device)

ECC Device (error correcting code device)

PMIC (power management IC)

SPD Hub (serial presence detect with hub)

| DRAM Memory device | DRAM | DRAM | DRAM | DRAM | | DRAM | DRAM | DRAM | DRAM | | DRAM |
|---|---|---|---|---|---|---|---|---|---|---|---|

RCD (registering clock driver)

TS (temperature sensor)

TS

| DRAM | DRAM | DRAM | DRAM | DRAM | | DRAM | DRAM | DRAM | DRAM | | DRAM |

Channel A (channel A)

Channel B (channel B)

FIG. 1

On-die error correction engine

FIG. 2

FIG. 3

An on-die error correction engine in a memory device obtains data in the memory device in response to a read operation on a memory module, performs error correction on the obtained data, writes error correction status information into a first register of the memory device, and outputs data obtained through error correction to a memory controller — 401

The memory controller obtains data output by a plurality of memory devices, and performs error correction on the data in the plurality of memory devices — 402

If error correction fails, the memory controller throttles a read/write process of the memory module — 403

The memory controller obtains data in the memory module again, and if the data obtained twice is consistent, reads error correction status information of the data in the plurality of memory devices from first registers of the plurality of memory devices — 404

If a quantity of memory devices in which errors occur is less than or equal to a quantity of error correcting code devices in the memory, the memory controller performs error correction on the data based on the memory device in which the error occurs — 405

The memory controller writes the data obtained through error correction back into the memory device — 406

The memory controller cancels throttling on the read/write process of the memory module — 407

The memory controller re-reads a memory address corresponding to the read operation, and checks re-read data; and if checking succeeds, the memory controller returns the re-read data to a processor; or if checking does not succeed, the memory controller reports an uncorrectable error to the processor — 408

FIG. 4

Home agent
Home agent

DDRC
Double data rate synchronous dynamic random access memory controller

DDRC ECC
Engine
Error correction
engine

DMC
Dynamic
memory
controller

MCU
Micro control
unit

BPG
Bit pattern
generator

PHY (physical layer)

Reg Reg Reg Reg Reg Reg Reg Reg Reg Reg

RCD

8*8 data block

Inverse matrix

FIG. 5

Memory controller

Data obtaining module — 601

Data error correction module — 602

FIG. 6

702 704

Computing device

Processor — 702

Communication interface — 704

— 700

Bus

701

Memory

Functional module

703

FIG. 7

## INTERNATIONAL SEARCH REPORT

| International application No. |
|---|
| **PCT/CN2023/136221** |

**A. CLASSIFICATION OF SUBJECT MATTER**

G06F11/07(2006.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 内存, 存储器, 纠错, 纠正, 错误, 颗粒, 失败, 成功, 状态, 寄存器, memory, storage, error, correct, particle, fail, success, status, state, register

**C. DOCUMENTS CONSIDERED TO BE RELEVANT**

| Category* | Citation of document, with indication, where appropriate, of the relevant passages | Relevant to claim No. |
|---|---|---|
| X | CN 112579342 A (HYGON INFORMATION TECHNOLOGY CO., LTD.) 30 March 2021 (2021-03-30) <br> description, paragraphs [0036]-[0093] | 1, 4, 5, 11, 14, 15, 20-23 |
| Y | CN 112579342 A (HYGON INFORMATION TECHNOLOGY CO., LTD.) 30 March 2021 (2021-03-30) <br> description, paragraphs [0036]-[0093] | 2, 3, 6-10, 12, 13, 16-19 |
| Y | CN 107885611 A (XI'AN MICROELECTRONICS TECHNOLOGY INSTITUTE) 06 April 2018 (2018-04-06) <br> description, paragraphs [0074]-[0112] | 2, 3, 6-10, 12, 13, 16-19 |
| A | CN 115705262 A (HUAWEI TECHNOLOGIES CO., LTD.) 17 February 2023 (2023-02-17) <br> entire document | 1-23 |
| A | US 2016085624 A1 (EMPIRE TECHNOLOGY DEVELOPMENT LLC) 24 March 2016 (2016-03-24) <br> entire document | 1-23 |

☐ Further documents are listed in the continuation of Box C.    ☑ See patent family annex.

| | |
|---|---|
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **08 January 2024** | **24 January 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/136221**

| Patent document cited in search report | | | Publication date (day/month/year) | Patent family member(s) | | | Publication date (day/month/year) |
|---|---|---|---|---|---|---|---|
| CN | 112579342 | A | 30 March 2021 | None | | | |
| CN | 107885611 | A | 06 April 2018 | CN | 107885611 | B | 19 February 2021 |
| CN | 115705262 | A | 17 February 2023 | WO | 2023020031 | A1 | 23 February 2023 |
| US | 2016085624 | A1 | 24 March 2016 | US | 9513990 | B2 | 06 December 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310363637
- CN 202310751941